# EUROPÄISCHE PATENTSCHRIFT

(11) **EP 2 746 438 B1**
(45) Veröffentlichungstag und Bekanntmachung des Hinweises auf die Patenterteilung: **02.09.2015**
(21) Anmeldenummer: 13005807.6
(22) Anmeldetag: 13.12.2013
(51) Int. Cl.: D04H 1/65, D06M 15/423, C08J 7/04

(54) **Aminoplastharzfilm**
Amino-plastic resin film
Film en résine aminoplaste

(30) Priorität: 20.12.2012 EP 12008474
(43) Veröffentlichungstag der Anmeldung: 25.06.2014
(73) Patentinhaber: RESOPAL GMBH, 64823 Gross-Umstadt (DE)
(72) Erfinder: Hahn, Hans Ludwig, 68647 Biblis (DE)
(74) Vertreter: Mai, Dörr, Besier

(56) Entgegenhaltungen:
- DE-A1- 1 947 142
- DE-A1-102005 035 691
- GB-A- 1 214 873
- US-A- 3 816 212

## Beschreibung

Die vorliegende Erfindung betrifft ein Aminoplastharzfilm, Verfahren zu seiner Herstellung sowie seine Verwendung.

Aminoplastharzfilme oder -folien für die Beschichtung von Substraten sind bereits seit langem bekannt und werden üblicherweise ausgehend von handelsüblichen saugfähigen cellulosehaltigen Faserstoffen, Gewebe oder Dekorpapieren durch Imprägnierung dieser Materialien mit einem Aminoplastharz in einem ein- oder zweistufigen Verfahren hergestellt. Für weitere Details wird auf die Fachliteratur, insbesondere auf Ullmann's Encyclopedia of Industrial Chemistry, Wiley VCH Verlag, Weinheim, 2003, 6. Auflage, Band 2, Seite 537 bis 565, verwiesen.

Diese Aminoplastharzfilme oder -folien eignen sich insbesondere zum Veredeln von glatten Oberflächen, beispielsweise in der Möbelindustrie. Dabei wurde in den letzten Jahren verstärkt von den Möbelherstellern der Wunsch geäußert, Aminoplastharzfilme auch für die 3D-Beschichtung von Flächen mit dreidimensionalen Strukturen, wie sie z. B. bei einigen Stilrichtungen (Möbel im Landhausstil) zu finden sind, zu verwenden. Die oben beschriebenen Melaminharzfilme sind allerdings aufgrund ihrer unzureichenden Verformbarkeit für eine 3D-Beschichtung nicht geeignet.

Zur Lösung dieser Probleme schlägt die deutsche Patentanmeldung DE 10 2005 035 690 A1 die Verwendung von Aminoplastharzvliesfilmen oder -folien vor, die ein mit einem vernetzbaren aminoplastischen Harz getränktes Vlies beinhalten, wobei das Vlies 1 bis 100 Gew.-% Melaminfaser, bezogen auf den Gesamtfaseranteil, enthält. Diese Filme oder Folien sollen sich zur flächigen Beschichtung von dreidimensional strukturierten Oberflächen, Formkörpern und dreidimensional strukturierter Gegenstände mit scharfkantigen Elementen eignen und dennoch die üblichen Qualitätsmerkmale einer Aminoplastharzvliesfolie oder -film aufweisen. Insbesondere sollen bei guter Verformbarkeit sehr gute Oberflächenqualitäten erreicht werden.

Für die Ziele der vorliegenden Erfindung sind die Filme oder Folien der DE 10 2005 035 690 A1 jedoch nicht geeignet. Die in dieser Patentanmeldung beschriebenen Aminoplastharzvliesfilme weisen zwar durch den Einsatz von Melaminharzfasern im Vlies eine höhere dreidimensionale Flexibilität auf als Aminoplastmelaminharzfilme auf Basis von Cellulosefasern. Allerdings wäre aus Anwendersicht eine weitere Verbesserung des Grads der dreidimensionalen Verformbarkeit, der Oberflächenrobustheit, der Oberflächeneigenschaften sowie der Zugfestigkeit wünschenswert.

Die deutsche Patentanmeldung DE 10312819 A1 beschreibt eine Abdeckschicht für Motorraumauskleidung, bestehend aus mindestens einer bindemittelgebundenen Vliesstoffschicht, wobei die Vliesstoffschicht aus einer Mischung von Viskose- (VC), Polyester- (PES), Cellulose-, Polyamid- (PA), Polyolefin- und/oder preoxidierten Polyacrylnitril (PAN)-Fasern und Schmelzklebefasern mit einem Bindemittel verfestigt ist, welches ein thermoplastisches Verhalten im Temperaturbereich von 20 bis 200°C und ein duroplastisches Verhalten oberhalb von 200°C aufweist. Als Beispiele für ein geeignetes Bindemittel werden Acrylsäure-Co- und Terpolymere mit Styrol, Butadien und/oder Acrylnitril genannt. Die Verwendung von Aminoplasten als Bindemittel wird allerdings nicht in Erwägung gezogen.

In ähnlicher Weise offenbart die deutsche Patentanmeldung DE 10312817 A1 eine Abdeckschicht für Motorraumauskleidung, bestehend aus mindestens einer bindemittelgebundenen Vliesstoffschicht, wobei die Vliesstoffschicht mit einem Bindemittel verfestigt ist, welches ein thermoplastisches Verhalten im Temperaturbereich von 20 bis 200°C und ein duroplastisches Verhalten oberhalb von 200°C aufweist. Als Beispiele für ein geeignetes Bindemittel werden Acrylsäure-Co- und Terpolymere mit Styrol, Butadien und/oder Acrylnitril genannt. Hinweise auf die Verwendung von Aminoplasten als Bindemittel sind aber auch dieser Druckschrift nicht zu entnehmen.

Für die vorliegend ins Auge gefassten Anwendungen werden jedoch Materialien mit duroplastischen Eigenschaften bei deutlich niedrigeren Temperaturen, insbesondere bei Temperaturen kleiner 150°C, gewünscht.

Die internationale Patentanmeldung WO 0071343 A1 lehrt die Herstellung von Laminaten für den Automobilbereich, die durch Verkleben geeigneter Substrate, wie z. B. Fasern, unter Verwendung eines Zweikomponenten-Reaktionsklebers erhalten werden.

Allerdings weist das Laminat dieser Patentanmeldung nicht die vorliegend gewünschten Oberflächeneigenschaften auf. Flexible Materialien mit geschlossenen, möglichst transparenten Oberflächen, die mit einer Hochdruckpressschichtstoffoberfläche vergleichbar sind, werden in dieser Druckschrift nicht beschrieben.

Die französische Patentanmeldung FR 2735152 A1 betrifft die Herstellung eines flächenförmigen Materials, das durch Imprägnieren eines Papiers mit 35-70 Gew.% Melamin-, Phenol- oder Harnstoffharz erhalten wird, wobei das Papier eine Mischung aus Cellulosefasern und künstlichen und/oder synthetischen Fasern umfasst.

Das flächenförmige Material dieser Druckschrift weist jedoch für die vorliegend beabsichtigten Anwendungen eine unzureichende Flexibilität sowie eine zu geringe Zugfestigkeit auf.

In der amerikanischen Patentanmeldung US 2005221705 A1 werden imprägnierte Vliesstoffe gezeigt, die Fasern mit mindestens zwei unterschiedlichen Längen im Bereich von 0,12 Inch bis 0,6 Inch umfassen. Vorzugsweise soll der Vliesstoff Glasfasern enthalten, wobei alternativ auch synthetische Fasern aus Nylon, Polyester, Polyethylen genannt werden. Als bevorzugte Bindemittel für das Imprägnat werden insbesondere Acrylate, mit oder ohne Vernetzungsmittel, Polyvinylalkohol, Carboxylmethylcellulose, Hydroxylethylcellulose, Ligninsulfonate und Harnstoff-Formaldehydharz erwähnt.

Für die vorliegend ins Auge gefassten Anwendungen ist aber insbesondere die Zugfestigkeit dieser Materialien zu gering.

Vor diesem Hintergrund sollten Möglichkeiten zur Verbesserung herkömmlicher Aminoplastharzfilme aufgezeigt werden. Dabei stand insbesondere der Wunsch nach Aminoplastharzfilmen mit möglichst hoher Flexibilität und guter Oberflächenbeschaffenheit, vor allem mit guter Oberflächenqualität nach Verformung, im Vordergrund. Gleichzeitig sollten die Aminoplastharzfilme eine möglichst hohe Zugfestigkeit zeigen. Im Übrigen sollten die Aminoplastharzfilme eine möglichst geschlossene hygienische Oberfläche, eine möglichst hohe Kratzfestigkeit, eine möglichst hohe Scherfestigkeit und eine möglichst hohe Wasserbeständigkeit aufweisen. Bevorzugt sollten die Aminoplastharzfilme transluzent sein und insbesondere die Darstellung besonders tiefer Strukturen ermöglichen. Darüber hinaus sollten die Aminoplastharzfilme eine möglichst geringe spezifische Dichte aufweisen und eine möglichst geringe Brandlast haben, damit sie als schwerentflammbare Materialien eingesetzt werden können.

Dabei sollte die erfindungsgemäße Lösung auf möglichst einfache Art und Weise, großtechnisch und kostengünstig realisierbar sein und möglichst universell, insbesondere für die Herstellung von Verbundmaterialien, umfassend derartige Aminoplastharzfilme, einsetzbar sein. In diesem Zusammenhang wurde insbesondere nach einer Lösung gesucht, um die Verarbeitbarkeit herkömmlicher Aminoplastvliesstofffilme möglichst zu verbessern und insbesondere ein sauberes Bohren, Fräsen und eine saubere Verarbeitung mit einer Schlagschere zu ermöglichen. Ferner sollten Möglichkeiten zur möglichst einfachen Herstellung von in möglichst guter Qualität bedruckten Aminoplastharzfilmen aufgezeigt werden.

Gelöst werden diese sowie weitere Aufgaben, die sich aus den hierin diskutierten Zusammenhängen unmittelbar ergeben, durch ein Aminoplastharzfilm mit allen Merkmalen des vorliegenden Anspruchs 7. Der auf Anspruch 7 rückbezogene Unteranspruch beschreibt eine bevorzugte Ausführungsform des erfindungsgemäßen Aminoplastharzfilms. In den übrigen Ansprüchen werden besonders vorteilhafte Aminoplast-Vliesstoffimprägnate zur Herstellung des erfindungsgemäßen Aminoplastharzfilms, Verfahren zur Herstellung des erfindungsgemäßen Aminoplast-Vliesstoffimprägnats sowie besonders vorteilhafte Anwendungsgebiete des erfindungsgemäßen Aminoplastharzfilms unter Schutz gestellt.

Durch die Bereitstellung eines Aminoplastharzfilms, der durch zumindest teilweises Aushärten eines Aminoplast-Vliesstoffimprägnats erhältlich ist, welches eine Restfeuchte von mindestens 4,0 Gew.-% aufweist und, jeweils bezogen auf das Gesamtgewicht des Aminoplast-Vliesstoffimprägnats,
a) 5,0 Gew.-% bis 95,0 Gew.-% eines teilweise ausgehärteten Aminoplastharzes und
b) 5,0 Gew.-% bis 95,0 Gew.-% eines Vliesstoffs umfasst,
wobei der Vliesstoff Polyesterfasern und Polyamidfasern umfasst und wobei der Aminoplastharzfilm eine Restfeuchte kleiner 4,0 Gew.-% aufweist, gelingt es auf nicht ohne Weiteres vorhersehbare Weise, einen Aminoplastharzfilm mit einem verbesserten Eigenschaftsprofil zur Verfügung zu stellen. Der erfindungsgemäße Aminoplastharzfilm zeichnet sich insbesondere durch eine besonders hohe Flexibilität und eine gute Oberflächenbeschaffenheit, vor allem durch eine gute Oberflächenqualität nach Verformung aus. Dabei weist der erfindungsgemäße Aminoplastharzfilm eine größere zweidimensionale und dreidimensionale Flexibilität auf, insbesondere im Vergleich mit Cellulosebahnen, die mit Melaminharz imprägniert wurden.

Aufgrund der größeren Flexibilität des Aminoplastharzfilms ist es möglich, mehrere Aminoplast-Vliesstoffimprägnate übereinander zu schichten und so Aminoplastharzfilme mit einer höheren Filmstärken herzustellen, die dann in die gewünschte Endform dreidimensional verformt werden können. Derartige Aminoplastharzfilme mit größeren Filmstärken weisen eine ausgezeichnete Oberflächenrobustheit und Oberflächeneigenschaften vor und auch nach dem dreidimensionalen Verformen auf, die den entsprechenden Eigenschaften von Hochdruckpressschichtstoff vergleichbar sind.

Gleichzeitig zeigen die erfindungsgemäßen Aminoplastharzfilme in der Regel eine vergleichsweise hohe Zugfestigkeit.

Darüber hinaus weisen die erfindungsgemäßen Aminoplastharzfilme eine sehr hohe Kratzfestigkeit, eine sehr hohe Scherfestigkeit und eine sehr hohe Wasserbeständigkeit auf. Weiterhin sind die erfindungsgemäßen Aminoplastharzfilme in der Regel transluzent und ermöglichen die Darstellung besonders tiefer Strukturen. Die vergleichsweise geringe spezifische Dichte der erfindungsgemäßen Aminoplastharzfilme bedingt eine geringere Brandlast und eröffnet damit den Einsatz als schwerentflammbares Material oder Laminat. Schließlich kann die erfindungsgemäße Lösung auf vergleichbar einfache Art und Weise, großtechnisch und kostengünstig realisiert und umgesetzt werden. Sie ist universell einsetzbar und eignet sich insbesondere für die Herstellung von Verbundmaterialien, umfassend derartige Aminoplastharzfilme. Dabei zeichnen sich sowohl das erfindungsgemäße Aminoplast-Vliesstoffimprägnat, als auch der erfindungsgemäße Aminoplastharzfilm und das erfindungsgemäße Verbundmaterial durch eine verbesserte Verarbeitbarkeit aus und der erfindungsgemäße Aminoplastharzfilm und das erfindungsgemäße Verbundmaterial erlauben insbesondere ein sauberes Bohren, Fräsen und eine saubere Verarbeitung mit einer Schlagschere.

Die Herstellung der erfindungsgemäßen Aminoplastharzfilme kann in der Regel unter Verwendung einer Hochdruckschichtstoffpresse erfolgen, in welcher die Aminoplast-Vliesstoffimprägnate als Flächenware gepresst werden. Dabei kann der so hergestellte Aminoplastharzfilm auch mit einer fein strukturierten Oberflächen versehen werden und der resultierende Aminoplastharzfilm dann bei Bedarf unter Hitze und Druck dreidimensional verformt werden, ohne dass diese fein strukturierte Oberfläche verloren geht. Vorteilhaft gegenüber dem Stand der Technik ist in diesem Zusammenhang außerdem die niedrige Temperatur von üblicherweise unter 150°C, bei der der Aminoplastharzfilm ausgehärtet werden kann.

Durch die Verwendung von entsprechend bedruckten Vliesstoffen (vor der Imprägnierung mit dem Aminoplasten) ist beispielsweise durch Imprägnierung des bedruckten Vliesstoffes mit einem Aminoplasten und Aushärten des Aminoplasten die Herstellung von erfindungsgemäßen bedruckten Aminoplastharzfilmen auf äußerst einfache Art und Weise in derselben Qualität wie bei der Verwendung von Dekorpapier möglich.

Der Aminoplastharzfilm der vorliegenden Erfindung ist durch zumindest teilweises Aushärten eines Aminoplast-Vliesstoffimprägnats erhältlich, das, jeweils bezogen auf das Gesamtgewicht des Aminoplast-Vliesstoffimprägnats,
a) 15,0 Gew.-% bis 60,0 Gew.-% bevorzugt 20,0 Gew.-% bis 50,0 Gew.-%, insbesondere 20,0 Gew.-% bis 45,0 Gew.-%, eines teilweise ausgehärteten Aminoplastharzes und
b) 40,0 Gew.% bis 85,0 Gew.-% bevorzugt 50,0 Gew.% bis 80,0 Gew.-%, insbesondere 55,0 Gew.% bis 80,0 Gew.-%, eines Vliesstoffs umfasst,
wobei der Anteil weiterer Bestandteile vorzugsweise kleiner 25,0 Gew.-%, bevorzugt kleiner 10,0 Gew.%, besonders bevorzugt kleiner 5,0 Gew.-%, insbesondere kleiner 1,0 Gew.-% ist.

"*Aminoplaste*" sind Polykondensationsprodukte aus Carbonyl-Verbindungen, vorzugsweise Aldehyden, wie Formaldehyd, oder Ketonen, und NH-Gruppen enthaltenden Verbindungen, wie Harnstoff, Melamin, Urethane, Cyan- bzw. Cyandiamid, aromatische Amine und Sulfonamide, die in einer Art Mannich-Reaktion miteinander verknüpft werden und bei der Anwendung zu Duroplasten aushärten. Bevorzugte Aminoplasten sind Harnstoffharze, Melaminharze, Urethanharze, Cyan-, bzw. Cyandiamidharze, Anilinharze und Sulfonamidharze. Als besonders bevorzugt hat sich die Verwendung von Melamin-Formaldehyd-Harzen herausgestellt. Darunter sind härtbare Kondensationsprodukte aus Melamin und Formaldehyd zu verstehen. Ferner können auch Melamin-Hamstoff-Formaldehyd-Harze bevorzugt sein. Darüber hinaus ist auch der Einsatz von Melamin-Formaldehyd-Acrylat-Harzen besonders vorteilhaft.

Für die Zwecke der vorliegenden Erfindung haben sich insbesondere Melamin-Formaldehydharze bewährt, die vorzugsweise durch Kondensation von Melamin mit Formaldehyd bei einem Molverhältnis von 1,3 mol bis 2,5 mol Formaldehyd pro mol Melamin erhältlich sind. Die Kondensation der Harze erfolgt vorzugsweise bei einem pH im Bereich von 8 bis 10 und zweckmäßigerweise bei einer Temperatur im Bereich von 40°C bis 100°C, bis der geeignete Kondensationsgrad erreicht wird. Die so hergestellten Melaminharze weisen im Allgemeinen Feststoffgehalte von 40 bis 70 Gew.-% auf, wobei als Feststoffgehalt hier der Trockenrückstand bezeichnet wird, der ermittelt wird, indem 1 g wässriges Harz zwei Stunden im Trockenschrank bei 120°C getrocknet wird. Die Viskosität der wässrigen Harze liegen, jeweils gemessen bei 20°C, vorzugsweise im Bereich von 10 bis 200 mPas, insbesondere zwischen 30 und 150 mPas.

Das Aminoplastharz kann übliche Mengen an sich bekannter Hilfsmittel, wie Härter, Netz- und Trennmittel enthalten. Für weitere Informationen zu Aminoplastharzen wird auf die Fachliteratur, insbesondere auf Ullmann's Encyclopedia of Industrial Chemistry, Wiley VCH Verlag, Weinheim, 2003, 6. Auflage, Band 2, Seite 537 bis 565, oder Becker und Braun, Kunststoffhandbuch 10 Duroplaste, Carl Hansa Verlag, München Wien, 1988, 2. Auflage, Seite 41 bis 51, verwiesen.

"*Vliesstoffe*" bezeichnen im Rahmen der vorliegenden Erfindung ein Gebilde aus Fasern begrenzter Länge, Endlosfasern (Filamenten) oder geschnittenen Garnen, die auf irgendeine Weise zu einem Vlies (einer Faserschicht, einem Faserflor) zusammengefügt und auf irgendeine Weise miteinander verbunden worden sind, wobei das Verkreuzen oder Verschlingen von Garnen davon ausgeschlossen ist, wie es beim Weben, Wirken, Stricken, der Spitzenherstellung, dem Flechten und der Herstellung von getufteten Erzeugnissen geschieht. Nicht zu den Vliesstoffen gehören weiterhin Folien und Papiere.

Bevorzugte Vliesstoffe sind flexible textile Flächengebilde, die aus kontinuierlichen Fasern, Stapelfasern und/oder aus Schnittfasern aufgebaut sind.

Im Rahmen der vorliegenden Erfindung umfasst der Vliesstoff Polyesterfasern und Polyamidfasern.

Bevorzugte Polyesterfasern umfassen Polybutylenterephthalat (PBT)-Wiederholungseinheiten und/oder Polyethylenterephthalat (PET)-Wiederholungseinheiten, wobei Polyesterfasern, die mindestens 50 Gew.-%, bevorzugt mindestens 75 Gew.-%, insbesondere mindestens 90 Gew.-% Polyethylenterephthalat (PET)-Wiederholungseinheiten umfassen, besonders bevorzugt werden.

Bevorzugte Polyamidfasern umfassen aliphatische Polyamide, bei welchen sich die Monomere von aliphatischen Grundkörpern ableiten, wie z. B. Polyamide, die Wiederholungseinheiten von ε-Caprolactam (Polycaprolactam, kurz PA 6) oder von Hexamethylendiamin und Adipinsäure (PA 66) umfassen; teilaromatische Polyamide, bei welchen sich die Monomere zum Teil von aromatischen Grundkörpern ableiten, wie z. B. Polyamide, die Wiederholungseinheiten von Hexamethylendiamin und Terephthalsäure (PA 6T) umfassen; sowie aromatische Polyamide, bei welchen sich die Monomere von aromatischen Grundkörpern ableiten, wie z. B. Polyamide, die Wiederholungseinheiten von para-Phenylendiamin und Terephthalsäure (Aramid) umfassen. Dabei haben sich für die Zwecke der vorliegenden Erfindung Polyamidfasern besonders bewährt, die mindestens 50 Gew.-%, bevorzugt mindestens 75 Gew.-%, insbesondere mindestens 90 Gew.-% Wiederholungseinheiten von ε-Caprolactam umfassen.

Die jeweiligen Anteile der Polyesterfasern und der Polyamidfasern können grundsätzlich frei gewählt werden. Bevorzugt werden jedoch Vliesstoffe eingesetzt, die, jeweils bezogen auf ihr Gesamtgewicht,
i) 5,0 Gew.-% bis 95,0 Gew.-%, bevorzugt 25,0 Gew.-% bis 80,0 Gew.-%, besonders bevorzugt 50,0 Gew.-% bis 70,0 Gew.-%, insbesondere 55,0 Gew.-% bis 65,0 Gew.-% Polyesterfasern und
ii) 5,0 Gew.-% bis 95,0 Gew.-%, bevorzugt 20,0 Gew.-% bis 75,0 Gew.-%, besonders bevorzugt 30,0 Gew.-% bis 50,0 Gew.-%, insbesondere 35,0 Gew.-% bis 45,0 Gew.-% Polyamidfasern
umfassen, wobei der Anteil weiterer Bestandteile vorzugsweise kleiner 25,0 Gew.-%, bevorzugt kleiner 10,0 Gew.%, besonders bevorzugt kleiner 5,0 Gew.-%, insbesondere kleiner 1,0 Gew.-% ist.

Die Dicke des Vliesstoffs liegt vorzugsweise im Bereich von 0,1 mm bis 10,0 mm, bevorzugt im Bereich von 0,2 mm bis 1,0 mm, insbesondere im Bereich von 0,3 mm bis 0,6 mm.

Erfindungsgemäß ist der mittlere Durchmesser der Polyesterfasern vorzugsweise kleiner 15 µm, bevorzugt kleiner 10 µm, besonders bevorzugt kleiner 7,5 µm, insbesondere im Bereich von 1 µm bis 5 µm.

Der mittlere Durchmesser der Polyamidfasern ist vorzugsweise kleiner 15 µm, bevorzugt kleiner 10 µm, besonders bevorzugt kleiner 7,5 µm, insbesondere im Bereich von 1 µm bis 5 µm.

Das Verhältnis des mittleren Durchmessers der Polyesterfasern zum mittleren Durchmesser der Polyamidfasern liegt vorzugsweise im Bereich von 10:1 bis 1:10, bevorzugt im Bereich von 5:1 bis 1:5, besonders bevorzugt im Bereich von 3:1 bis 1:1, insbesondere im Bereich von 2:1 bis >1:1.

Die Länge der Polyesterfasern unterliegt grundsätzlich keinen besonderen Beschränkungen. Im Rahmen einer ersten bevorzugten Ausführungsform der vorliegenden Erfindung werden sogenannte Endlosfilamente eingesetzt. Im Rahmen einer weiteren bevorzugten Ausführungsform der vorliegenden Erfindung kommen Polyesterfasern mit Stapelfaserlängen im Bereich von 0,5 mm bis 200 mm, bevorzugt im Bereich von 1 mm bis 100 mm, insbesondere im Bereich von 1,5 mm bis 60 mm, zum Einsatz.

Die Länge der Polyamidfasern unterliegt grundsätzlich keinen besonderen Beschränkungen. Im Rahmen einer ersten bevorzugten Ausführungsform der vorliegenden Erfindung werden sogenannte Endlosfilamente eingesetzt. Im Rahmen einer weiteren bevorzugten Ausführungsform der vorliegenden Erfindung kommen Polyamidfasern mit Stapelfaserlängen im Bereich von 0,5 mm bis 200 mm, bevorzugt im Bereich von 1 mm bis 100 mm, insbesondere im Bereich von 1,5 mm bis 60 mm, zum Einsatz.

Der Titer der Polyesterfasern liegt vorzugsweise im Bereich von 0,01 dtex bis 25,0 dtex und ist bevorzugt kleiner 10,0 dtex, zweckmäßigerweise kleiner 5,0 dtex, besonders bevorzugt kleiner 1,0 dtex, noch mehr bevorzugt kleiner 0,5 dtex, insbesondere kleiner 0,3 dtex.

Der Titer der Polyamidfasern liegt vorzugsweise im Bereich von 0,01 dtex bis 25,0 dtex und ist bevorzugt kleiner 10,0 dtex, zweckmäßigerweise kleiner 5,0 dtex, besonders bevorzugt kleiner 1,0 dtex, noch mehr bevorzugt kleiner 0,5 dtex, insbesondere kleiner 0,3 dtex.

Das Flächengewicht des Vliesstoffes liegt vorzugsweise im Bereich von 25 g/m² bis 250 g/m², bevorzugt im Bereich von 40 g/m² bis 200 g/m², besonders bevorzugt im Bereich von 60 g/m² bis 150 g/m², insbesondere im Bereich von 80 g/m² bis 120 g/m².

Die Dichte des Vliesstoffs liegt vorzugsweise im Bereich von 50 kg/m³ bis 500 kg/m³, bevorzugt im Bereich von 100 kg/m³ bis 350 kg/m³.

Die Zugfestigkeit des Vliesstoffs in Maschinenrichtung beträgt vorzugsweise mindestens 150 N/mm², bevorzugt mindestens 200 N/mm², insbesondere mindestens 225 N/mm². Die Ermittlung der Zugfestigkeit erfolgt vorzugsweise gemäß EN 13934-1.

Die Zugfestigkeit des Vliesstoffs quer zur Maschinenrichtung beträgt vorzugsweise mindestens 100 N/mm², bevorzugt mindestens 150 N/mm², insbesondere mindestens 175 N/mm². Die Ermittlung der Zugfestigkeit erfolgt vorzugsweise gemäß EN 13934-1.

Die Begriffe *"Maschinenrichtung"* und *"quer zur Maschinenrichtung"* gehen auf die Orientierung des Stoffes bei seiner Herstellung zurück. Da diese Richtungen am resultierenden Produkt unter Umständen jedoch nicht mehr zu erkennen sind, bezeichnet der Begriff *"Maschinenrichtung"* im Rahmen dieser Erfindung eine prinzipiell beliebig festzulegende erste Richtung des Materials und der Begriff *"quer zur Maschinenrichtung"* bezeichnet im Rahmen dieser Erfindung eine zweite Richtung des Materials, die senkrecht (quer) zur ersten Richtung ist.

Die Weiterreißfestigkeit des Vliesstoffs in Maschinenrichtung beträgt vorzugsweise mindestens 5 N/mm², bevorzugt mindestens 6 N/mm², insbesondere mindestens 7 N/mm². Die Ermittlung der Weiterreißfestigkeit erfolgt vorzugsweise gemäß EN 13937.

Die Weiterreißfestigkeit des Vliesstoffs quer zur Maschinenrichtung beträgt vorzugsweise mindestens 5 N/mm², bevorzugt mindestens 6 N/mm², insbesondere mindestens 7 N/mm². Die Ermittlung der Weiterreißfestigkeit erfolgt vorzugsweise gemäß EN 13937.

Die Dehnung des Vliesstoffs bei Höchstzugkraft in Maschinenrichtung beträgt vorzugsweise mindestens 10 %, bevorzugt mindestens 25 % und liegt insbesondere im Bereich von 30 % bis 50 %. Die Ermittlung der Dehnung bei Höchstzugkraft erfolgt vorzugsweise gemäß EN 13934-1.

Die Dehnung des Vliesstoffs bei Höchstzugkraft quer zur Maschinenrichtung beträgt vorzugsweise mindestens 20 %, bevorzugt mindestens 35 % und liegt insbesondere im Bereich von 45 % bis 65 %. Die Ermittlung der Dehnung bei Höchstzugkraft erfolgt vorzugsweise gemäß EN 13934-1.

Der Aschegehalt des Aminoplast-Vliesstoffimprägnats ist vorzugsweise kleiner 1,0 Gew.-%, bevorzugt kleiner 0,5 Gew.-%, insbesondere kleiner 0,25 Gew.-%.

Die Luftdurchlässigkeit des Aminoplast-Vliesstoffimprägnats ist möglichst hoch und wird daher zweckmäßigerweise durch mehrere Lagen gemessen. Die Luftdurchlässigkeit beträgt vorzugsweise mindestens 0,5 ml/s, bevorzugt mindestens 1,0 ml/s, insbesondere mindestens 1,5 ml/s, wobei die Messung vorzugsweise an einem Vliesstoff mit einem Flächengewicht größer 500 g/m², bevorzugt größer 750 g/m², besonders bevorzugt größer 1000 g/m², insbesondere größer 1250 g/m², oder an mehreren Lagen des Vliesstoffs mit einem Gesamtflächengewicht größer 500 g/m², bevorzugt größer 750 g/m², besonders bevorzugt größer 1000 g/m², insbesondere größer 1250 g/m², durchgeführt wird.

Das Flächengewicht des Aminoplast-Vliesstoffimprägnats beträgt vorzugsweise mindestens 50 g/m², bevorzugt mindestens 100 g/m² bis 500 g/m², besonders bevorzugt 150 g/m² bis 400 g/m², insbesondere 200 g/m² bis 300 g/m².

Im Rahmen der vorliegenden Erfindung ist das Aminoplast des Aminoplast-Vliesstoffimprägnats teilweise ausgehärtet. Die Viskosität des Aminoplasts, jeweils gemessen bei 20°C, ist vorzugsweise größer 200 mPas.

Die Restfeuchte des erfindungsgemäßen Aminoplast-Vliesstoffimprägnats, bezogen auf sein Gesamtgewicht, ist mindestens 4 Gew.-% und vorzugsweise kleiner 10,0 Gew.-%, bevorzugt kleiner 8,0 Gew.-%, insbesondere kleiner 7,0 Gew.-%. Sie wird vorzugsweise in Anlehnung an die Norm EN 20287 nach 24 Stunden Trocknung im Trockenschrank bei 105°C, bevorzugt nach 48 Stunden im Trockenschrank bei 105°C, ermittelt.

Der erfindungsgemäße Aminoplastharzfilm ist durch zumindest teilweises Aushärten des Aminoplast-Vliesstoffimprägnats erhältlich und weist eine Restfeuchte kleiner 4,0 Gew.-%, bevorzugt kleiner 3,0 Gew.-%, besonders bevorzugt kleiner 2,0 Gew.-%, zweckmäßigerweise kleiner 1,0 Gew.-%, insbesondere kleiner 0,75 Gew.-% auf.

Der erfindungsgemäße Aminoplastharzfilm zeichnet sich u. a. durch eine hohe Flexibilität und sehr gute mechanische Stabilität aus. Seine Biegefestigkeit, gemessen gemäß EN ISO 178 in einem Dreipunkt-Biegeversuch, beträgt vorzugsweise höchstens 160 N/mm², bevorzugt höchstens 125 N/mm², besonders bevorzugt höchstens 100 N/mm², zweckmäßigerweise höchstens 75 N/mm², insbesondere höchstens 50 N/mm².

Das Verhältnis des Biegemoduls in Längsrichtung zum Biegemodul in Querrichtung liegt vorzugsweise im Bereich von 1:10 bis 10:1, bevorzugt im Bereich von 1:1,3 bis 1,3:1, besonders bevorzugt im Bereich von 1:1,1 bis 1,1:1, insbesondere im Bereich von 1:1,05 bis 1,05:1.

Der E-Modul des erfindungsgemäßen Aminoplastharzfilms, gemessen gemäß EN ISO 178, beträgt vorzugsweise höchstens 15 N/mm², bevorzugt höchstens 10 N/mm², besonders bevorzugt höchstens 7,5 N/mm², insbesondere weniger als 5 N/mm².

Das Verhältnis des E-Moduls in Längsrichtung zum E-Moduls in Querrichtung liegt vorzugsweise im Bereich von 1:10 bis 10:1, bevorzugt im Bereich von 1:1,3 bis 1,3:1, besonders bevorzugt im Bereich von 1:1,2 bis 1,2:1, zweckmäßigerweise im Bereich von 1:1,1 bis 1,1:1, insbesondere im Bereich von 1:1,05 bis 1,05:1.

Die Zugfestigkeit des erfindungsgemäßen Aminoplastharzfilms beträgt vorzugsweise mindestens 150 N/mm², bevorzugt mindestens 200 N/mm², insbesondere mindestens 225 N/mm². Die Ermittlung der Zugfestigkeit erfolgt vorzugsweise gemäß EN 13934-1.

Die Dehnung des erfindungsgemäßen Aminoplastharzfilms bei Höchstzugkraft beträgt vorzugsweise mindestens 10 %, bevorzugt mindestens 25 % und liegt insbesondere im Bereich von 30 % bis 65 %. Die Ermittlung der Dehnung bei Höchstzugkraft erfolgt vorzugsweise gemäß EN 13934-1.

Im Rahmen der vorliegenden Erfindung werden alle angegebenen Größen, sofern nichts anderes ausdrücklich angegeben wird, unter den üblichen Bedingungen, im Zweifelsfall bei Raumtemperatur (20°C) ermittelt.

Die verbesserte Verformbarkeit der erfindungsgemäßen Aminoplastharzfilme kann sowohl beim Kaltverformen, bevorzugt bei Temperaturen kleiner 100°C, insbesondere bei Temperaturen im Bereich von 15°C bis 50°C, als auch beim Heißverformen, bevorzugt bei Temperaturen größer 100°C, insbesondere bei Temperaturen im Bereich von 110°C bis 160°C, zur Herstellung von dreidimensional verformten Gegenständen genutzt werden, wobei die Vorteile der vorliegenden Erfindung insbesondere bei der Verwirklichung enger Radien zum Tragen kommen, wobei das Verhältnis von Biegeradius zur Dicke des Aminoplastharzfilms vorzugsweise größer 5, bevorzugt größer 7, insbesondere größer 8 ist.

Die verbesserte Verformbarkeit des erfindungsgemässen Aminoplasthatzfilms zeigt sich insbesondere auch dadurch, dass großflächige bombierende Verformungen mit dem Material möglich sind.

Für bevorzugte Aminoplastharzfilme ist die Biegespannung nach einem Weg von 6 mm kleiner 140 N/mm², bevorzugt kleiner 125 N/mm², besonders bevorzugt kleiner 100 N/mm², zweckmäßigerweise kleiner 75 N/mm², insbesondere kleiner 50 N/mm². Die Ermittlung der Biegespannung nach einem Weg von 6 mm erfolgt vorzugsweise in Anlehnung an EN 310.

Der erfindungsgemäße Aminoplastharzfilm ist vorzugsweise transluzent und erlaubt die Darstellung besonders tiefer Strukturen. Dabei richtet sich die Opazität des Aminoplastharzfilms bei einem reinen Aminoplast-Vliestofffolien Aufbau nach der Schichtdicke. Je mehr Schichten der Aufbau umfasst, desto weniger durchscheinend ist er.

Wenn ein Mischaufbau mit Dekorpapier und Aminoplast-Vliesstofffolien oder ein Mischaufbau mit Kernpapier und Aminoplast-Vliestofffolien eingesetzt wird, besteht hingegen keine Opazität

Für die Zwecke der vorliegenden Erfindung wird die Opazität des Aminoplastharzfilms günstigerweise mit dem Messsystem Dr. Lange, spectro color diffus / 8° bei Normlicht: D65 / 10° ermittelt. Dabei weisen besonders vorteilhafte Aminoplastharzfilme einen Refextionswerte (Y) größer 0, bevorzugt größer 10, besonders bevorzugt größer 20, insbesondere größer 50, auf.

Die spezifische Dichte des erfindungsgemäßen Aminoplastharzfilms ist vergleichsweise gering und vorzugsweise kleiner 1,50 g/cm³, bevorzugt kleiner 1,40 g/cm³, insbesondere im Bereich von 1,3 g/cm³ bis 1,39 g/cm³.

Die Dicke des erfindungsgemäßen Aminoplastharzfilms unterliegt keinen besonderen Beschränkungen. Für selbsttragende Ausführungsformen haben sich jedoch Dicken größer 1,0 mm, bevorzugt größer 1,2 mm, insbesondere größer 1,5 mm als besonders geeignet erwiesen.

Weiterhin zeigt der erfindungsgemäßen Aminoplastharzfilm ein duroplastisches Verhalten bei vergleichsweise niedrigen Temperaturen, in der Regel bei Temperaturen kleiner 160°C, bevorzugt kleiner 150°C.

Die Herstellung des erfindungsgemäßen Aminoplast-Vliesstoffimprägnats kann auf an sich bekannte Weise durch Tränken des Vliesstoffs mit der erforderlichen Menge des Aminoplastharzes und anschließendes teilweises Aushärten des Aminoplastharzes erfolgen.

Zur Herstellung des Aminoplastharzfilms wird das Aminoplast-Vliesstoffimprägnat zweckmäßigerweise zwischen zwei Pressmittel eingebracht, verpresst und zumindest teilweise ausgehärtet. *"Pressmittel"* bezeichnen im Rahmen der vorliegenden Erfindung alle zum Pressen geeigneten Mittel, wie Pressplatten und Matrizen. Zur Pressung werden vorzugsweise Pressmittel mit einer glatten, hochglänzenden und abriebfesten Oberfläche verwendet, die mit Titandiborid, Zirconiumdiborid, Hafniumdiborid, Molybdändiborid, Tantaldiborid, Wolframdiborid oder Vanadiumdiborid beschichtet ist. Die Beschichtung mit diesem Diborid erfolgt bevorzugt in einem Magnetron-Sputter-Beschichtungssystem und weist bevorzugt eine Vickers-Härte von wenigstens 2000 auf. Als besonders geeignet haben sich Pressmittel erwiesen, wie sie in der europäischen Patentanmeldung EP 0 826 790 offenbart sind. Im Rahmen einer weiteren besonders bevorzugten Variante der vorliegenden Erfindung werden Aluminiumformen als Pressmittel eingesetzt.

Die Verpressung des Aufbaus erfolgt bevorzugt bei einer Temperatur im Bereich von 110°C bis 160°C, besonders bevorzugt im Bereich von 120°C bis 150°C und bei erhöhtem Druck von vorzugsweise wenigstens 1,5 N/mm², besonders bevorzugt wenigstens 5 N/mm², insbesondere zwischen 6 N/mm² und 15 N/mm². Die Presszeit liegt vorzugsweise im Bereich von 10 Minuten bis 90 Minuten, besonders bevorzugt im Bereich von 15 Minuten bis 50 Minuten.

Die gleichzeitige Anwendung von Wärme und hohem Druck ermöglicht das Fließen und anschließende Aushärten des Bindemittels.

Im Rahmen einer besonders bevorzugten Variante der vorliegenden Erfindung wird das erfindungsgemäße Aminoplast-Vliesstoffimprägnat zur Herstellung eines Laminats verwendet. Besonders bevorzugt werden in diesem Zusammenhang Laminate, die
a) eine Kernschicht,
b) einen erfindungsgemäßes Aminoplastharzfilm und
c) ggf. eine Dekorschicht
umfassen.

In der Kernschicht des Laminats sind dabei vorzugsweise eine oder mehrere Bögen Kraftpapier enthalten.

*"Kraftpapier"* ist nach DIN 6730 ein Papier, das überwiegend aus Kraftzellstoff besteht, dem Kraftzellpapier zugesetzt sein kann, und das eine hohe Festigkeit, insbesondere eine hohe Zugfestigkeit, und eine hohe Beständigkeit aufweist. Kraftpapier wird üblicherweise wenigstens zu 90 % aus frischem, vorzugsweise ungebleichtem Sulfatzellstoff (Kraftzellstoff) hergestellt. Ferner kann Kraftpapier neben dem Zellstoff noch Stärke, Alaun und/oder Leim enthalten, um z. B. bestimmte Oberflächeneffekte und Festigkeitssteigerungen zu erzielen. Für die Zwecke der vorliegenden Erfindung hat sich Kraftpapier mit einer Grammatur von 100 g/m² bis 300 g/m², insbesondere 150 g/m² bis 200 g/m²; als besonders vorteilhaft erwiesen. Ein bevorzugtes Kraftpapier ist Natron-Kraftpapier, das dem Fachmann auf dem Gebiet der HPL geläufig ist.

Die Anzahl der eingesetzten Kraftpapierbögen hängt im Wesentlichen von der gewünschten Dicke der Kernschicht oder des Laminats ab. Vorzugsweise enthält das Laminat der vorliegenden Erfindung ein bis acht Bögen, bevorzugter 3 bis 7 Bögen und insbesondere 4 bis 6 Bögen Kraftpapier.

Das Gewicht des erfindungsgemäß verwendeten Kraftpapiers ist nicht weiter eingeschränkt. Es hängt insbesondere von der Anzahl der eingesetzten Kraftpapierbögen und somit von der gewünschten Dicke des Laminats ab. Gemäß einer bevorzugten Ausführungsform liegt das Gewicht der verwendeten Kraftpapierbögen im Bereich von 125 g/m² bis 250 g/m², vorzugsweise im Bereich von 140 g/m² bis 230 g/m².

Auf einer Seite der aus Kraftpapier gebildeten Kernschicht des Laminats ist vorzugsweise der erfindungsgemäße Aminoplastharzfilm aufgebracht.

Im Rahmen einer bevorzugten Ausführungsform der vorliegenden Erfindung ist über dem erfindungsgemäßen Aminoplastharzfilm keine weitere Schicht angeordnet. Dabei kann auf anderen Seite des Laminats ggf. mindestens eine Dekorschicht angeordnet sein, die vorzugsweise einen Bogen Dekorpapier umfasst.

Im Rahmen einer weiteren bevorzugten Ausführungsform der vorliegenden Erfindung ist über dem erfindungsgemäßen Aminoplastharzfilm mindestens eine Dekorschicht angeordnet, die vorzugsweise einen Bogen Dekorpapier umfasst. Alternativ kann der erfindungsgemäß verwendete Vliesstoff auch direkt bedruckt werden.

Durch das Dekorpapier oder durch den bedruckten Vliesstoff erhält das Laminat eine besondere Optik. Demnach bezeichnet die Dekorschicht diejenige auf der Kernschicht aufgebrachte Schicht, deren Muster vom Betrachter visuell wahrgenommen werden kann.

Hierin verwendet bezieht sich Dekorpapier auf jedes Material, das für die Verbindung mit der darunter liegenden Kernschicht und gegebenenfalls der darüber liegenden Overlayschicht geeignet ist und ein Dekor wiedergeben kann. Das bevorzugte Material für das Dekorpapier ist Papier. Allerdings können auch gleichermaßen Folien, zum Beispiel Kunststofffolien, oder Furniere unter dem Begriff Dekorpapier erfasst sein. Furniere sind Holzblätter, die in der Regel eine Dicke von 0,1 mm bis 3 mm aufweisen und der Dekorschicht eine Holzoptik, zum Beispiel eine bestimmte Maserung, verleihen können.

Üblicherweise wird das Dekor auf das Dekorpapier oder den Vliesstoff mittels eines Druckprozesses aufgebracht. So kann beispielsweise mittels fototechnischer Reproduktion ein beliebiges Motiv erstellt und im Tiefdruckverfahren oder Digitaldruckverfahren auf das Dekorpapier aufgedruckt werden. Das Motiv kann zum Beispiel aus Holz-, Stein-, Keramik, Farb- und/oder Fantasiemustern bestehen. Ferner kann das Motiv aber auch durch Bestreichen des Dekorpapiers mit einer oder mehreren Farben erfolgen.

Das Flächengewicht des verwendeten Dekorpapiers ist nicht weiter eingeschränkt. Vorzugsweise liegt das Flächengewicht im Bereich von 40 g/m² bis 145 g/m², mehr bevorzugt im Bereich von 60 g/m² bis 100 g/m², insbesondere bei 70 g/m² bis 90 g/m².

Zwischen der Kernschicht und dem Aminoplastharzfilm, zwischen dem Aminoplastharzfilm und der optionalen Dekorschicht und/oder zwischen der Kernschicht und der optionalen Dekorschicht können gegebenenfalls weitere Schichten, wie zum Beispiel eine Underlayschicht, angeordnet sein. Diese Underlayschicht kann beispielsweise dazu dienen, den Verzug des Laminats zu verhindern oder elektrostatische Aufladungen zu reduzieren. Vorzugsweise umfasst die Underlayschicht einen oder mehrere Bögen Kraftpapier.

Wenn das Laminat eine Overlayschicht aufweist, dann bildet diese vorzugsweise die Deckschicht für das Laminat und ist auf der Dekorschicht aufgebracht. Die Overlayschicht umfasst einen oder mehrere Bögen eines vorzugsweise faserhaltigen Materials.

Das Flächengewicht der für die Overlayschicht verwendeten Bögen ist nicht weiter eingeschränkt. Es liegt vorzugsweise im Bereich von 12 g/m² bis 40 g/m², bevorzugter im Bereich von 20 g/m² bis 35 g/m² und noch mehr bevorzugt im Bereich von 25 g/m² bis 32 g/m².

Das Overlaymaterial weist vorzugsweise eine hohe Beständigkeit gegenüber chemischer, thermischer und mechanischer Beanspruchung auf. Wenn für die Herstellung des Overlays faserhaltiges Material verwendet wird, dann enthält dieses faserhaltige Material vorzugsweise gebleichte Zellstofffaser, insbesondere Cellulose, zum Beispiel α-Cellulose. Das Overlaymaterial ist vorzugsweise von einer Beschaffenheit, die es gewährleistet, dass das unter dem Overlay liegende Motiv der Dekorpapierschicht nach dem Verpressen zu dem Verbundwerkstoff sichtbar ist. Daher weist das Overlay bevorzugt einen hohen Grad an Transparenz auf.

Gemäß einer bevorzugten Ausführungsform ist das Bindemittel, das im gehärteten Zustand die Kraftpapierbögen untereinander und die aus den Kraftpapierbögen aufgebaute Kernschicht mit dem Aminoplastharzfilm und ggf. mit der Dekorschicht verbindet, ein wärmehärtendes Harz. Bevorzugte Bindemittel sind flüssige oder verflüssigbare Harze, die für sich allein oder mit Reaktionsmitteln, zum Beispiel Härtern oder Beschleunigern, ohne Abspaltung flüchtiger Komponenten durch Polymerisation oder Polyaddition über Vernetzungsreaktionen zu Duroplasten aushärten. Als besonders bevorzugt haben sich hierfür Phenolharze erwiesen. Phenolharze sind nach DIN 16916, Teil 1 und ISO 10082 als Kondensationsprodukte von Phenolen und Aldehyden definiert. Unsubstituiertes Phenol und Formaldehyd sind die Hauptrohstoffe zur Herstellung von Phenolharzen. Zu Einzelheiten der Chemie der Phenolharze wird auf folgende Literatur verwiesen: A. Gardziella, L.A. Pilato, A. Knop, "Phenolic Resins", Springer Verlag, Berlin, Heidelberg, New York, Tokio, 1999; A. Gardziella, H.G. Haub, "Phenolharze" in: Kunststoff Handbuch, Band 10, "Duroplaste", S. 12-40, Carl Hanser Verlag, München, Wien, 1988; P. Adolphs, E. Giebeler, P. Stäglich, "Houben-Weyl, Methoden der Organischen Chemie", Band E20, Teil 3, S. 1974-1810, 4. Auflage, Georg Thieme Verlag, Stuttgart. Gemäß einer ganz besonders bevorzugten Ausführungsform wird als Binder für die Kraftpapierbögen Phenol-Formaldehyd-Harz verwendet.

Wenn zwischen der Kernschicht und dem Aminoplastharzfilm, zwischen dem Aminoplastharzfilm und der optionalen Dekorschicht und/oder zwischen der Kernschicht und der optionalen Dekorschicht eine Underlayschicht vorgesehen ist, dann ist das Bindemittel, das gegebenenfalls die Underlaybögen untereinander, die Kernschicht mit der Underlayschicht und die Underlayschicht mit dem Vliesstoffimprägnat und/oder der optionalen Dekorschicht verbindet, vorzugsweise eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Hamstoff-Formaldehyd-Harz oder ein Melamin-Formaldehyd-Acrylat-Harz.

Dem Fachmann ist klar, dass es insbesondere an den Grenzflächen einzelner Schichten, wie z. B. der Grenzfläche zwischen Kernschicht und Aminoplastharzfilm zu einem Vermischen der verwendeten Bindemittel kommen kann und die Grenzen zwischen den einzelnen Schichten zumeist nicht durch das verwendete Bindemittel, sondern vor allem durch die äußersten, die einzelnen Schichten bildenden Bögen definiert werden.

Das vorstehend beschriebene Laminat wird vorzugsweise dadurch erhalten, dass man einen Aufbau herstellt, der die Kraftpapierbögen, einen in Aminoplast getränktes Vliesstoff und ggf. den Dekorpapierbogen und ggf. den Overlaybogen ein geeignetes Bindemittelsystem enthält, diesen Aufbau zwischen spezielle Pressmittel einbringt, verpresst und das Bindemittelsystem dabei aushärtet.

Unter Bindemittelsystem wird erfindungsgemäß ein einzelnes geeignetes Bindemittel oder eine Kombination von geeigneten Bindemitteln verstanden. Unter geeigneten Bindemitteln werden vorzugsweise diejenigen Bindemittel verstanden, die vorstehend als bevorzugt für das Verbinden der einzelnen in dem Laminat enthalten Schichten bzw. das Verbinden der die Schichten bildenden Bögen beschrieben worden sind.

Obwohl im Rahmen dieser Beschreibung von *"dem"* Dekorpapierbogen bzw. *"dem"* Overlaybogen die Rede ist, versteht der Fachmann, dass, je nach gewünschter Beschaffenheit des Laminats, auch mehrere Dekorpapierbögen bzw. Overlaybögen verwendet werden können. Der Aufbau des Laminats bzw. des Aufbaus enthaltend mehrere Dekorpapierbögen bzw. Overlaybögen ergibt sich für den Fachmann selbstverständlich aus den nachstehenden Ausführungen.

Zum Herstellen des Aufbaus sind einzelne Bögen sowie der Vliesstoff, vorzugsweise sämtliche Bögen und der Vliesstoff, der verschiedenen Schichten vorzugsweise mit einem geeigneten Bindemittel imprägniert.

Gemäß einer weiteren bevorzugten Ausführungsform sind die im Aufbau vorhandenen Kraftpapierbögen vorzugsweise mit einem Phenol-Formaldehyd-Harz imprägniert. Der Bindemittelgehalt des imprägnierten Kraftpapierbogens liegt vorzugsweise im Bereich von 25 Gew.-% bis 55 Gew.-%, mehr bevorzugt im Bereich von 28 Gew.-% bis 36 Gew.-% und noch mehr bevorzugt im Bereich von 30 Gew.-% bis 34 Gew.-%. Der im Aufbau vorzugsweise vorhandene Dekorpapierbogen ist zweckmäßigerweise mit einem Melamin-Formaldehyd-Harz oder einem Melamin-Harnstoff-Formaldehyd-Harz oder einem Melamin-Formaldehyd-Acrylat-Harz imprägniert. Der Bindemittelgehalt des imprägnierten Dekorbogens hängt unter anderem von dem Motiv des Dekorbogens ab. Bei unifarbenen Dekoren liegt der Bindemittelgehalt des imprägnierten Dekorbogens vorzugsweise im Bereich von 35 Gew.-% bis 65 Gew.-%, mehr bevorzugt im Bereich von 42 Gew.-% bis 60 Gew.-% und noch mehr bevorzugt im Bereich von 48 Gew.-% bis 55 Gew.-%. Bei mehrfarbigen, durch Muster erzeugten oder anderweitig bedruckten Dekormotiven liegt der Bindemittelgehalt des imprägnierten Dekorbogens vorzugsweise im Bereich von 35 Gew.-% bis 65 Gew.-%, mehr bevorzugt im Bereich von 37 Gew.-% bis 50 Gew.-% und noch mehr bevorzugt im Bereich von 40 Gew.-% bis 45 Gew.-%. Der Bindemittelgehalt des gegebenenfalls im Aufbau vorhandenen Overlaybogens liegt vorzugsweise im Bereich von 60 Gew.-% bis 90 Gew.-%, mehr bevorzugt im Bereich von 65 Gew.-% bis 86 Gew.-% und noch mehr bevorzugt im Bereich von 70 Gew.-% bis 83 Gew.-%.

Ein erfindungsgemäß präparierter Aufbau wird anschließend zwischen zwei Pressmittel eingebracht und verpresst. Zur Pressung werden vorzugsweise Pressmittel mit einer glatten, hochglänzenden und abriebfesten Oberfläche verwendet, die mit Titandiborid, Zirconiumdiborid, Hafniumdiborid, Molybdändiborid, Tantaldiborid, Wolframdiborid oder Vanadiumdiborid beschichtet ist. Die Beschichtung mit diesem Diborid erfolgt bevorzugt in einem Magnetron-Sputter-Beschichtungssystem und weist bevorzugt eine Vickers-Härte von wenigstens 2000 auf. Als besonders geeignet haben sich Pressmittel erwiesen, wie sie in der europäischen Patentanmeldung EP 0 826 790 offenbart sind. Im Rahmen einer weiteren besonders bevorzugten Variante der vorliegenden Erfindung werden Aluminiumformen als Pressmittel eingesetzt.

Die eingesetzten Pressmittel oder Pressoberflächen können auch die Form von dreidimensionalen Pressformen haben die eher einem Presstempel und einem kraftschlüssigen Gegenstück entsprechen. Das eingesetzte Material kann somit zu dreidimensionalen Formteilen ausgehärtet werden. Die Qualität der Oberfläche wird dabei in entscheidendem Maße von der Oberflächenbeschaffenheit des Pressmittels bestimmt.

Die Verpressung des Aufbaus erfolgt bevorzugt bei einer Temperatur im Bereich von 110°C bis 160°C, besonders bevorzugt im Bereich von 120°C bis 150°C und bei erhöhtem Druck von vorzugsweise wenigstens 1,5 N/mm², bevorzugt wenigstens 5 N/mm², besonders bevorzugt wenigstens 7,5 N/mm², insbesondere wenigstens 10 N/mm². Die Presszeit liegt vorzugsweise im Bereich von 40 Minuten bis 90 Minuten, besonders bevorzugt im Bereich von 50 Minuten bis 80 Minuten.

Die gleichzeitige Anwendung von Wärme und hohem Druck ermöglicht das Fließen und anschließende Aushärten der Bindemittel.

Das nach dem Verpressen des Aufbaus und dem Aushärten der Harze erhaltene Produkt wird schließlich als Laminat bezeichnet.

Die fertige Laminat weist, je nach gewähltem Aufbau, unterschiedliche Dicken auf. Übliche Dicken liegen im Bereich von 0,2 mm bis 2 mm, vorzugsweise im Bereich von 0,6 mm bis 1,5 mm und besonders bevorzugt im Bereich von 0,8 mm bis 1,2 mm. Es ist allerdings auch möglich, Laminate mit weitaus größeren Dicken, wie beispielsweise im Bereich von 2 mm bis 20 mm herzustellen.

Enthält das Laminat eine Overlayschicht, dann liegt deren Dicke vorzugsweise im Bereich von 80 µm bis 120 um, besonders bevorzugt im Bereich von 80 µm bis 110 µm. Die Dicke der Dekorschicht liegt vorzugsweise im Bereich von 65 µm bis 140 µm, besonders bevorzugt im Bereich von 65 µm bis 80 µm. Die Dicke der Kernschicht kann je nach gewünschter Dicke des Laminats stark variieren und liegt vorzugsweise im Bereich von 250 µm bis 1900 µm, besonders bevorzugt im Bereich von 500 µm bis 1500 µm.

Enthält das Laminat keine Overlayschicht, dann liegt die Dicke der Dekorschicht ebenfalls vorzugsweise im Bereich von 65 µm bis 140 µm, besonders bevorzugt im Bereich von 80 µm bis 140 µm.

Die Dicke des Aminoplastharzfilms liegt vorzugsweise im Bereich von 0,15 mm bis 0,60 mm, besonders bevorzugt im Bereich von 0,25 mm bis 0,45 mm.

Die Dicke der Kernschicht kann unabhängig von der Gegenwart einer Overlayschicht beispielsweise im Bereich von 250 µm bis 1900 µm, besonders bevorzugt im Bereich von 500 µm bis 1500 µm, liegen.

Das Endgewicht des erfindungsgemäßen Laminats ist von mehreren Faktoren, wie zum Beispiel der Dicke des Laminats, dem Gewicht der eingesetzten Komponenten und der Anzahl der verwendeten Bögen und Vliesstoffe, abhängig. Vorzugsweise liegt das Gewicht des Laminats im Bereich von 1,2 kg/m² bis 1,6 kg/m² Oberfläche des Laminats, besonders bevorzugt im Bereich von 1,3 kg/m² bis 1,5 kg/m², zum Beispiel bei 1,4 kg/m².

Im Rahmen einer besonders bevorzugten Variante der vorliegenden Erfindung handelt es sich bei dem erfindungsgemäßen Laminat um ein Continuous Pressing Laminate (CPL-Schichtstoff), welches vorzugsweise in einem kontinuierlichen Verfahren hergestellt. Es liegt vorzugsweise in Plattenform oder als Rollenware vor und wird z.B. zur Beschichtung von Türblättern verwendet.

Die Herstellung des CPL-Schichtstoffs kann wie für die übrigen Laminate durch Verpressen eines Aufbaus erfolgen, der die einzelnen Bögen sowie den Vliesstoff umfasst, wobei die einzelnen Bögen sowie der Vliesstoff, vorzugsweise sämtliche Bögen und der Vliesstoff, der verschiedenen Schichten vorzugsweise mit einem geeigneten Bindemittel imprägniert.

Ein erfindungsgemäß präparierter Aufbau wird anschließend zwischen zwei Pressmittel, bevorzugt zwischen zwei Pressbänder, eingebracht und verpresst. Zur Pressung werden vorzugsweise Pressmittel mit einer glatten, hochglänzenden und abriebfesten Oberfläche verwendet, die mit Titandiborid, Zirconiumdiborid, Hafniumdiborid, Molybdändiborid, Tantaldiborid, Wolframdiborid oder Vanadiumdiborid beschichtet ist. Die Beschichtung mit diesem Diborid erfolgt bevorzugt in einem Magnetron-Sputter-Beschichtungssystem und weist bevorzugt eine Vickers-Härte von wenigstens 2000 auf. Als besonders geeignet haben sich Pressmittel erwiesen, wie sie in der europäischen Patentanmeldung EP 0 826 790 offenbart sind.

Die Verpressung des Aufbaus erfolgt bevorzugt bei einer Temperatur im Bereich von 110°C bis 190°C, besonders bevorzugt im Bereich von 120°C bis 190°C und bei erhöhtem Druck von vorzugsweise wenigstens 1,5 N/mm², bevorzugt wenigstens 5 N/mm², besonders bevorzugt wenigstens 7,5 N/mm², insbesondere wenigstens 10 N/mm². Die Presszeit liegt vorzugsweise im Bereich von 1 Minuten bis 90 Minuten, besonders bevorzugt im Bereich von 1 Minuten bis 12 Minuten.

Die gleichzeitige Anwendung von Wärme und hohem Druck ermöglicht das Fließen und anschließende Aushärten der Bindemittel.

Das nach dem Verpressen des Aufbaus und dem Aushärten der Harze erhaltene Produkt wird schließlich als CPL-Schichtstoff bezeichnet.

Gemäß einem weiteren Aspekt betrifft die Erfindung einen Verbundkörper, der einen Träger und ein auf dem Träger haftendes Laminat umfasst. Vorzugsweise handelt es sich bei dem Verbundkörper um ein Paneel, insbesondere um eine Bodenplatte (Fußbodenpaneel). Ferner kann das Paneel aber auch eine andere Platte, wie zum Beispiel eine Tischplatte, sein. Weitere bevorzugte Verbundkörper umfassen Möbel, insbesondere Sitzschalen, und Automobilteile, insbesondere Automobilteile für den KFZ-Innenraum.

Bevorzugte Träger sind Spanplatten, Sperrholz, Trägerplatten (ggf. mit Schichtstoff beschichtet), hochverdichtete Faserplatten, mitteldichte Faserplatten, Hartfaserplatten, Tischlerplatten, Funiere und Furnierplatten, Sperrhölzer, Massivholz, Waben, Schaumstoffe, Metallplatten, Bleche, mineralische Träger, Natur- und Kunststein, Fliesen und Gipskartonplatten. Die Träger können mit einem geeigneten Bindemittel, wie z. B. einem Melaminharz beschichtet, oder unbeschichtet sein. Das Laminat kann sowohl auf flüssigkeitsaufnehmende (saugfähige) Träger, wie z. B. unbeschichtete Spanplatten und unbeschichtetes Holz, als auch auf nicht flüssigkeitsaufnehmende (nicht saugfähige) Träger, wie z. B. Metalle, Keramik, Glas, beschichtete Hölzer, beschichtete Spanplatten usw. aufgebracht werden.

Verfahren und Mittel zum festen Verbinden von Laminat und Träger sind aus dem Stand der Technik bekannt. Beispielsweise kann das feste Verbinden von Laminat und Träger durch Verkleben oder mit Hilfe von aus dem Stand der Technik bekannten Verbindungselementen erfolgen.

Bevorzugt erfolgt das feste Verbinden von Laminat und Träger durch Verpressen, wobei anstelle des Laminats vorzugsweise die entsprechenden imprägnierten Bögen und/oder der imprägnierte Vliesstoff, die zur Herstellung des Laminats verwendet werden, eingesetzt werden. Der Aufbau wird zweckmäßigerweise zwischen zwei Pressmittel eingebracht, verpresst und zumindest teilweise ausgehärtet. Zur Pressung werden vorzugsweise Pressmittel mit einer glatten, hochglänzenden und abriebfesten Oberfläche verwendet, die mit Titandiborid, Zirconiumdiborid, Hafniumdiborid, Molybdändiborid, Tantaldiborid, Wolframdiborid oder Vanadiumdiborid beschichtet ist. Die Beschichtung mit diesem Diborid erfolgt bevorzugt in einem Magnetron-Sputter-Beschichtungssystem und weist bevorzugt eine Vickers-Härte von wenigstens 2000 auf. Als besonders geeignet haben sich Pressmittel erwiesen, wie sie in der europäischen Patentanmeldung EP 0 826 790 offenbart sind. Im Rahmen einer weiteren besonders bevorzugten Variante der vorliegenden Erfindung werden Aluminiumformen als Pressmittel eingesetzt.

Die Verpressung des Aufbaus erfolgt bevorzugt bei einer Temperatur im Bereich von 110°C bis 160°C, besonders bevorzugt im Bereich von 120°C bis 150°C und bei erhöhtem Druck von vorzugsweise wenigstens 1,5 N/mm², besonders bevorzugt wenigstens 5 N/mm², insbesondere zwischen 6 N/mm² und 15 N/mm². Die Presszeit liegt vorzugsweise im Bereich von 1 Minuten bis 90 Minuten, besonders bevorzugt im Bereich von 15 Minuten bis 50 Minuten.

Der Verbundkörper kann zudem weitere aus dem Stand der Technik bekannte Funktionsmaterialien aufweisen. Beispielhaft seien Materialien zum Flammschutz, zur Abschirmung von Strahlung, zur Schalldämpfung, zur Stabilisierung und zur Feuchtigkeitssperre genannt. Bevorzugte Funktionsmaterialien umfassen einen Gegenzug und/oder eine Trittschalldämpfung, wie sie bevorzugt bei Bodenplatten verwendet werden.

Die Dicke des Verbundkörpers ist nicht weiter eingeschränkt. Sie liegt vorzugsweise im Bereich von 9,0 mm bis 15,0 mm, besonders bevorzugt im Bereich von 10,0 mm bis 14,0 mm und ganz besonders bevorzugt im Bereich von 11,0 mm bis 13,0 mm. Die Dicke des in dem Verbundkörper vorhandenen Laminats kann, wie vorstehend beschrieben, vorzugsweise im Bereich von 0,2 mm bis 2,0 mm, besonders bevorzugt im Bereich von 0,6 mm bis 1,5 mm und ganz besonders bevorzugt im Bereich von 0,8 mm bis 1,2 mm liegen. Die Dicke des Trägers, beispielsweise einer hochverdichteten Faserplatte, liegt vorzugsweise im Bereich von 5,0 mm bis 13,0 mm, besonders bevorzugt im Bereich von 8,0 mm bis 10,0 mm, ganz besonders bevorzugt im Bereich von 9,0 bis 9,6 mm. Der gegebenenfalls vorgesehene Gegenzug und/oder die Trittschalldämpfung weisen vorzugsweise eine Dicke im Bereich von 0,5 mm bis 3,0 mm, besonders bevorzugt im Bereich von 1,0 mm bis 2,0 mm auf.

Das Endgewicht des Verbundkörpers ist nicht besonders eingeschränkt. Es liegt vorzugsweise im Bereich von 8 kg/m² bis 13 kg/m² Oberfläche des Verbundkörpers, besonders bevorzugt im Bereich von 9 kg/m² bis 12 kg/m² und ganz besonders bevorzugt im Bereich von 10 kg/m² bis 11 kg/m².

Der erfindungsgemäße Verbundkörper lässt sich auf für den Fachmann selbstverständliche Weise verarbeiten. Ist der Verbundkörper eine Bodenplatte, dann kann diese mit einer Nut- und Feder-Struktur versehen werden, um das flächenmäßige Verbinden einer Vielzahl solcher Bodenplatten zur Herstellung von brettartigen oder fliesenartiges Strukturen zu ermöglichen.

Eine weitere bevorzugte Anwendung der erfindungsgemäßen Aminoplastharzfilme ist ihr Einsatz als Pressform für die Herstellung von 3 dimensionalen Formkörpern mittels Pressformverfahren.

Gemäß einer ersten besonders bevorzugten Variante der vorliegenden Erfindung werden dabei eine oder mehrere Lagen des erfindungsgemäßen Aminoplast-Vliesstoffimprägnats in ein geeignetes Werkzeug, vorzugsweise in eine geeignete Pressform, eingebracht und unter Druck ausgehärtet.

Die Verpressung des Aufbaus erfolgt bevorzugt bei einer Temperatur im Bereich von 110°C bis 160°C, besonders bevorzugt im Bereich von 120°C bis 150°C und bei erhöhtem Druck von vorzugsweise wenigstens 1,5 N/mm², bevorzugt wenigstens 5 N/mm², besonders bevorzugt wenigstens 7,5 N/mm², insbesondere wenigstens 10 N/mm². Die Presszeit liegt vorzugsweise im Bereich von 1 Minute bis 90 Minuten, besonders bevorzugt im Bereich von 50 Minuten bis 80 Minuten.

Die gleichzeitige Anwendung von Wärme und hohem Druck ermöglicht das Fließen und anschließende Aushärten der Bindemittel.

Der entstehende Formkörper kann je nach Dicke selbsttragend sein. Die Oberflächegüte des Produkts bestimmt im Wesentlichen die Oberflächengüte des verwendeten Werkzeugs. Das Produkt zeigt die typischen Oberflächenqualitäten von Hochdruckpressschichtstoff.

Gemäß einer zweiten besonders bevorzugten Variante der vorliegenden Erfindung werden eine oder mehrere Lagen Aminoplast-Vliesstoffimprägnat zusammen mit einem Substrat, wie beispielsweise mit geleimten Sperrholzfunieren für Sitzschalen, in ein geeignetes Werkzeug, vorzugsweise in eine geeignete Pressform, eingebracht und unter Druck ausgehärtet.

Die Verpressung des Aufbaus erfolgt bevorzugt bei einer Temperatur im Bereich von 110°C bis 160°C, besonders bevorzugt im Bereich von 120°C bis 150°C und bei erhöhtem Druck von vorzugsweise wenigstens 1,5 N/mm², bevorzugt wenigstens 5 N/mm², besonders bevorzugt wenigstens 7,5 N/mm², insbesondere wenigstens 10 N/mm². Die Presszeit liegt vorzugsweise im Bereich von 1 Minute bis 90 Minuten, besonders bevorzugt im Bereich von 50 Minuten bis 80 Minuten.

Die Oberflächengüte des Produkts wird im Wesentlichen von der Oberflächengüte des verwendeten Werkzeugs bestimmt. Das Produkt zeigt die typischen Oberflächenqualitäten von Hochdruckpressschichtstoff.

Darüber hinaus ist wegen des vorteilhaften Eigenschaftsprofils die Verwendung des erfindungsgemäßen Aminoplast-Vliesstoffimprägnats, des erfindungsgemäßen Aminoplastharzfilms, des erfindungsgemäßen Laminats, des erfindungsgemäßen Verbundkörpers und der erfindungsgemäßen Pressform für die Herstellung von Möbeln, Arbeitsplatten, Fensterbänke, Türen und Automobilteilen, insbesondere für die Herstellung von Duschtrennwänden, Bodenleisten, Abschlußprofilen, Profilleisten, Ummantelungen, Sitzschalenbeschichtung für Innen- und Außenanwendungen, Formpressteilen, bevorzugt für dekorative oder konstruktive Teile, Türzargen, Türblätter, transparente Laminate für Reklame und Webetafeln, Dachplattenelemente, bevorzugt in Trapez - oder Wellenform, Wandverkleidungen, Wandabschlußprofilen, bevorzugt zu Abdichtungszwecken, und Autoarmaturen oder Teilen davon, besonders günstig.

Die vorliegende Erfindung wird durch die folgenden Beispiele weiter erläutert, die jedoch nicht einschränkend zu verstehen sind.

### Ausführungsbeispiel 1: Herstellung eines Vliesstoffimprägnats

Ein Kunststoffvlies aus einem Polyester/Polyamid-Copolymer mit einem Flächengewicht von nominell 100 g/m² wurde mit 52% einer etwa 50-55 %-igen wässrigen Melaminharz-Lösung (incl. Härter, Netz- und Trennmittel) getränkt. Das überschüssige Harz wurde an der Oberfläche zwischen zwei polierten Stahlwalzen entfernt. Das imprägnierte Vlies wurde 2 Stunden bei Raumtemperatur antrocknen gelassen und anschließend für 2 Minuten bei 130°C in einem Umlufttrockenschrank getrocknet, um ein vorimprägniertes Kunststoffvlies zu erhalten. Weitere Details zu den eingesetzten Materialien und zum erhaltenen Vliesstoffimprägnat werden in Tabelle 1 zusammengefasst:

**Tabelle 1**

| | |
|---|---|
| Polyesterfasern: PET-Wiederholungseinheiten [Gew.-%] | >90 |
| Polyamid: PA 6-Wiederholungseinheiten [Gew.-%] | >90 |
| Anteil der Polyesterfasern [Gew.-%] | 60 |
| Anteil der Polyamidfasern [Gew.-%] | 40 |
| Faserlänge der Polyesterfasern | endlos |
| Faserlänge der Polyamidfasern | endlos |
| Dicke des Vliesstoffs [mm] | 0,37 |
| mittlerer Durchmesser der Polyesterfasern [µm] | 3,5 |
| mittlerer Durchmesser der Polyamidfasern [µm] | 2,5 |
| Titer der Polyesterfasern [dtex] | 0,1-0,2 |
| Titer der Polyamidfasern [dtex] | 0,1-0,2 |
| Zugfestigkeit des Vliesstoffs (EN 13934-1; m)¹ [N/mm²] | 250 |
| Zugfestigkeit des Vliesstoffs (EN 13934-1; cd)² [N/mm²] | 200 |
| Weiterreißfestigkeit (EN 13937) des Vliesstoffs (m)¹ [N/mm²] | 8 |
| Weiterreißfestigkeit (EN 13937) des Vliesstoffs (cd)² [N/mm²] | 8 |
| Dehnung des Vliesstoffs bei Höchstzugkraft (EN 13934-1; m)¹ [%] | 40 |
| Dehnung des Vliesstoffs bei Höchstzugkraft (EN 13934-1; cd)² [%] | 55 |
| Flächengewicht des Vliesstoffs [g/m²] | 100 |
| Restfeuchte des Vliesstoffimprägnats [Gew.-%] | 6 |

| | |
|---|---|
| ¹: (m) : in Maschinenrichtung ²: (cd) quer zur Maschinenrichtung | |

### Ausführungsbeispiel 2: Herstellung eines Aminoplastharzfilms

Zur Herstellung eines Aminoplastharzfilm wurde zunächst ein für das Verpressen mit zwei Pressblechen geeigneter Aufbau hergestellt.

Dazu wurden 24 Bögen Kunststoffvlies, die mit dem Melaminharz imprägniert wurden (Ausführungsbeispiel 1), zusammengelegt.

Ein derartiger Aufbau ist in Schema 1 dargestellt.

| |
|---|
| Pressblech aus Stahl, evtl. mit einer Oberflächenbeschichtung (Chrom; Titandiborid) |

24 Bögen imprägniertes Kunststoffvlies

**Schema 1: Aufbau zur Herstellung einer erfindungsgemäßen Platte**

| |
|---|
| Pressblech aus Stahl, evtl. mit einer Oberflächenbeschichtung (Chrom; Titandiborid) |

Der derart präparierte Aufbau wurde zwischen zwei Pressblechen als Strukturgeber bei einem Druck von 8-10 N/mm² und einer Maximaltemperatur von 145°C für 25 min verpresst und anschließend auf Raumtemperatur abgekühlt. Die Restfeuchte des resultierendes Aminoplastharzfilms war kleiner 0,5 Gew.-%.

### Ausführungsbeispiel 3

Analog zum Ausführungsbeispiel 2 wurde ein Aminoplast-Kraftpapier-Harzfilm hergestellt. Dabei wurde dasselbe Melamin-Formaldehydharz wie in Ausführungsbeispiel 2 eingesetzt.

### Ausführungsbeispiel 4

Analog zum Ausführungsbeispiel 2 wurde ein Aminoplast-Dekorpapier-Harzfilm hergestellt. Dabei wurde dasselbe Melamin-Formaldehydharz wie in Ausführungsbeispiel 2 eingesetzt.

### Ergebnisse

Die in den Ausführungsbeispielen 2 bis 4 erhaltenen Harzfilme wurden hinsichtlich ihrer Festigkeit untersucht. Die Bestimmung der Dichte erfolgte nach EN ISO 1183-1. Die mechanischen Festigkeiten wurden gemäß EN ISO 178 in einem Dreipunkt-Biegeversuch ermittelt. Die erhaltenen Werte sind in Tabelle 2 dargestellt.

**Tabelle 2**

| Ausführungsbeispiel | Plattendicke [mm] | Biegefestigkeit [N/mm²] längs / quer | E-Modul [N/mm²] längs / quer | Dichte [g/cm³] |
|---|---|---|---|---|
| 2 | 4,75 | 94,70 / 91,06 | 4,158 / 4,044 | 1,35 |
| 3 | 5,22 | 180,30 / 137,05 | 16,407 / 11,863 | 1,54 |
| 4 | 4,75 | 165,70 / 149,76 | 15,030 / 19,018 | 1,69 |

### Ausführungsbeispiel 5

Analog zum Ausführungsbeispiel 2 wurde ein Aminoplastharzfilm aus 4 Bögen imprägniertem Kunststoffvliesstoff hergestellt.

### Ausführungsbeispiele 6 bis10

Der im Ausführungbeispiel 5 erhaltene Harzfilme wurden hinsichtlich seiner Flexibilität untersucht. Dabei wurden Referenzlaminate aus 100 % HPL, 100 % erfindungsgemäßem Material und diverse Mischaufbauten geprüft. Die Prüfung erfolgte in Anlehnung an die EN 310 mit einer Universalprüfmaschine Zwick Roell Z010. Die Dimensionen der Prüfkörper betrugen 150mm x 50mm x 0,8mm mit einem Auflagerabstand von 50mm. Die erhaltenen Werte sind in Tabelle 3 dargestellt.

**Tabelle 3**

| Ausführungsbeispiel | 6 | 7 | 8 | 9 | 10 |
|---|---|---|---|---|---|
| Anteil HPL [%] | 0 | 23 | 46 | 73 | 100 |
| Anteil Aminoplast-Vliesstoff-Harzfilm [%] | 100 | 77 | 54 | 27 | 0 |
| Dicke [mm] | 0,74 | 0,72 | 0,68 | 0,68 | 0,69 |
| Biegespannung bei Bruch (EN ISO 178) [N/mm²] | kein Bruch | 100,3 | 144,5 | 160 | 167,9 |
| Biegespannung nach Weg von 6 mm (EN 310; Auflagerungsabstand 50 mm) [N/mm²] | 46 | 62 | 125 | 146 | 144 |

## Patentansprüche

1. Aminoplast-Vliesstoffimprägnat mit einer Restfeuchte von mindestens 4,0 Gew. % (ermittelt in Anlehnung an die Norm EN 20287, wie in der Beschreibung beschrieben), umfassend, jeweils bezogen auf das Gesamtgewicht des Aminoplast-Vliesstoffimprägnats,
a) 15,0 Gew.-% bis 60,0 Gew.-% eines teilweise ausgehärteten Aminoplastharzes und
b) 40,0 Gew.-% bis 85,0 Gew.-% eines Vliesstoffs,
**dadurch gekennzeichnet, dass** der Vliesstoff Polyesterfasern und Polyamidfasern umfasst.

2. Aminoplast-Vliesstoffimprägnat nach Anspruch 1, **dadurch gekennzeichnet, dass** der Vliesstoff, jeweils bezogen auf sein Gesamtgewicht,
i) 5,0 Gew.-% bis 95,0 Gew.-% Polyesterfasern und
ii) 5,0 Gew.-% bis 95,0 Gew.-% Polyamidfasern
umfasst.

3. Aminoplast-Vliesstoffimprägnat nach Anspruch 1 oder 2, **dadurch gekennzeichnet, dass** sowohl die Polyesterfasern, als auch die Polyamidfasern einen mittleren Durchmesser kleiner 15 µm aufweisen.

4. Aminoplast-Vliesstoffimprägnat nach mindestens einem der vorangehenden Ansprüche, **dadurch gekennzeichnet, dass** der Vliesstoff ein Flächengewicht im Bereich von 25 g/m² bis 250 g/m² aufweist.

5. Aminoplast-Vliesstoffimprägnat nach mindestens einem der vorangehenden Ansprüche, **dadurch gekennzeichnet, dass** das Vliesstoffimprägnat eine Restfeuchte von kleiner 10,0 Gew.-% aufweist.

6. Verfahren zur Herstellung eines Aminoplast-Vliesstoffimprägnats nach mindestens einem der vorangehenden Ansprüche, bei welchem man
a) 40,0 Gew.-Teile bis 85,0 Gew.-Teile eines Vliesstoffs, umfassend Polyesterfasern und Polyamidfasern, mit
b) 15,0 Gew.-Teilen bis 60,0 Gew.-Teilen eines Aminoplastharzes tränkt und das Aminoplastharz teilweise aushärtet.

7. Aminoplastharzfilm, erhältlich durch zumindest teilweises Aushärten eines Aminoplast-Vliesstoffimprägnats nach mindestens einem der Ansprüche 1 bis 5, **dadurch gekennzeichnet, dass** der Aminoplastharzfilm eine Restfeuchte kleiner 4,0 Gew.-% aufweist.

8. Aminoplastharzfilm nach Anspruch 7, **dadurch gekennzeichnet, dass** der Aminoplastharzfilm eine Biegefestigkeit, gemessen gemäß EN ISO 178 in einem Dreipunkt-Biegeversuch, von höchstens 160 N/mm² aufweist.

9. Aminoplastharzfilm nach Anspruch 7 oder 8, **dadurch gekennzeichnet, dass** der Aminoplastharzfilm eine Zugfestigkeit von mindestens 150 N/mm² aufweist.

10. Laminat, umfassend einen Aminoplastharzfilm nach Anspruch 7, 8 oder 9.

11. Laminat nach Anspruch 10, umfassend
a) eine Kernschicht,
b) einen Aminoplastharzfilm nach Anspruch 7, 8 oder 9 und
c) ggf. eine Dekorschicht.

12. Laminat nach Anspruch 10 oder 11, **dadurch gekennzeichnet, dass** es sich um ein CPL-Schichtstoff handelt.

13. Verbundkörper, umfassend einen Träger und ein Laminat nach Anspruch 10,11 oder 12.

14. Pressform, umfassend einen Aminoplastharzfilm nach Anspruch 7, 8 oder 9.

15. Verwendung eines Aminoplast-Vliesstoffimprägnats nach mindestens einem der Ansprüche 1 bis 5, eines Aminoplastharzfilms nach Anspruch 7, 8 oder 9, eines Laminats nach Anspruch 10,11 oder 12, eines Verbundkörpers nach Anspruch 13 oder einer Pressform nach Anspruch 14 für die Herstellung von Möbeln, Arbeitsplatten, Fensterbänke, Türen oder Automobilteilen.

## Claims

1. An aminoplastic-nonwoven impregnate having a residual moisture of at least 4.0 % by weight (determined in accordance with standard EN 20287, as described in the Description), comprising, relative to the total weight of the aminoplastic-nonwoven impregnate in each case,
a) 15.0 % by weight to 60.0 % by weight of a partially cured amino resin and
b) 40.0 % by weight to 85.0 % by weight of a nonwoven,
**characterised in that** the nonwoven comprises polyester fibres and polyamide fibres.

2. The aminoplastic-nonwoven impregnate according to Claim 1, **characterised in that** the nonwoven, relative to its total weight in each case, comprises
i) 5.0 % by weight to 95.0 % by weight of polyester fibres, and
ii) 5.0 % by weight to 95.0% by weight of polyamide fibres.

3. The aminoplastic-nonwoven impregnate according to Claim 1 or 2, **characterised in that** both the polyester fibres and the polyamide fibres have a mean diameter less than 15 µm.

4. The aminoplastic-nonwoven impregnate according to at least one of the preceding claims, **characterised in that** the nonwoven has a weight per unit area in the range of 25 g/m² to 250 g/m².

5. The aminoplastic-nonwoven impregnate according to at least one of the preceding claims, **characterised in that** the nonwoven impregnate has a residual moisture of less than 10.0 % by weight.

6. A method for producing an aminoplastic-nonwoven impregnate according to at least one of the preceding claims, in which
a) 40.0 parts by weight to 85.0 parts by weight of a nonwoven comprising polyester fibres and polyamide fibres are impregnated with
b) 5.0 parts by weight to 60.0 parts by weight of an amino resin
and the amino resin is partially cured.

7. An amino resin film, obtainable by at least partial curing of an aminoplastic-nonwoven impregnate according to at least one of Claims 1 to 5, **characterised in that** the amino resin film has a residual moisture of less than 4.0 % by weight.

8. The amino resin film according to Claim 7, **characterised in that** the amino resin film has a bending strength, measured in accordance with EN ISO 178 in a three-point flexure test, of at most 160 N/mm².

9. The amino resin film according to Claim 7 or 8, **characterised in that** the amino resin film has a tensile strength of at least 150 N/mm².

10. A laminate, comprising an amino resin film according to Claim 7, 8 or 9.

11. The laminate according to Claim 10, comprising
a) a core layer,
b) an amino resin film according to Claim 7, 8 or 9, and
c) optionally a decorative layer.

12. The laminate according to Claim 10 or 11, **characterised in that** it is a CPL.

13. A composite body, comprising a substrate and a laminate according to Claim 10, 11 or 12.

14. A press mould, comprising an amino resin film according to Claim 7, 8 or 9.

15. Use of an aminoplastic-nonwoven impregnate according to at least one of Claims 1 to 5, of an amino resin film according to Claim 7, 8 or 9, of a laminate according to Claim 10, 11 or 12, of a composite body according to Claim 13 or of a press mould according to Claim 14 for the production of furniture, worktops, window ledges, doors or car parts.

## Revendications

1. Non-tissé imprégné d'un aminoplaste, présentant un taux d'humidité résiduelle d'au moins 4,0 % (déterminé suivant le principe de la norme EN 20287, comme expliqué dans la description) et comprenant, toujours par rapport au poids total du non-tissé imprégné d'un aminoplaste,
a) 15,0 % en poids à 60,0 % en poids d'une résine aminoplaste partiellement durcie, et
b) 40,0 % en poids à 85 % en poids d'un non-tissé,
**caractérisé en ce que** ledit non-tissé comprend des fibres de polyester et des fibres de polyamide

2. Non-tissé imprégné d'un aminoplaste selon la revendication 1, **caractérisé en ce que** ledit non-tissé comprend, toujours par rapport à son poids total,
i) 5,0 % en poids à 95 % en poids de fibres de polyester, et
ii) 5,0 % en poids à 95 % en poids de fibres de polyamide.

3. Non-tissé imprégné d'un aminoplaste selon les revendications 1 ou 2, **caractérisé en ce que** les fibres de polyester présentent, tout comme les fibres de polyamide, un diamètre moyen inférieur à 15 µm.

4. Non-tissé imprégné d'un aminoplaste selon l'une au moins des revendications précédentes, **caractérisé en ce que** ledit non-tissé présente une masse surfacique comprise entre 25 g/m² et 250 g/m².

5. Non-tissé imprégné d'un aminoplaste selon l'une au moins des revendications précédentes, **caractérisé en ce que** ledit non-tissé imprégné présente un taux d'humidité résiduelle inférieur à 10 % en poids.

6. Procédé permettant de fabriquer un non-tissé imprégné d'un aminoplaste selon l'une au moins des revendications précédentes et consistant à imprégner
a) 40,0 parties en poids à 85,0 parties en poids d'un non-tissé comprenant des fibres de polyester et des fibres de polyamide
b) avec 15,0 parties en poids à 60,0 parties en poids d'une résine aminoplaste,
et à soumettre ladite résine aminoplaste à un durcissement partiel.

7. Feuille en résine aminoplaste, pouvant être obtenue en soumettant un non-tissé imprégné d'un aminoplaste selon l'une au moins des revendications 1 à 5 à un durcissement au moins partiel, **caractérisée en ce que** la feuille en aminoplaste présente un taux d'humidité résiduelle inférieur à 4,0 % en poids.

8. Feuille en résine aminoplaste selon la revendication 7, **caractérisée en ce que** la feuille en résine aminoplaste présente une résistance en flexion, mesurée selon EN ISO 178 dans un essai de flexion à chargement en trois points, inférieure ou égale à 160 N/mm².

9. Feuille en résine aminoplaste selon les revendications 7 ou 8, **caractérisée en ce que** la feuille en résine aminoplaste présente une résistance à la traction d'au moins 150 N/mm².

10. Elément stratifié, comprenant une feuille en résine aminoplaste selon les revendications 7, 8 ou 9.

11. Elément stratifié selon la revendication 10, comprenant
a) une couche centrale,
b) une feuille en résine aminoplaste selon les revendications 7, 8 ou 9, et
c) éventuellement, une couche décorative.

12. Elément stratifié selon les revendications 10 ou 11, **caractérisé en ce qu'**il agit d'un matériau stratifié CPL.

13. Corps composite, comprenant un support et un élément stratifié selon les revendications 10, 11 ou 12.

14. Dispositif de moulage par compression, comprenant une feuille en résine aminoplaste selon les revendications 7, 8 ou 9.

15. Utilisation d'une non-tissé imprégné d'un aminoplaste selon l'une au moins des revendications 1 à 5, d'une feuille en résine aminoplaste selon les revendications 7, 8 ou 9, d'un élément stratifié selon les revendications 10, 11 ou 12, d'un corps composite selon la revendication 13, ou d'un dispositif de moulage par compression selon la revendication 14, pour fabriquer des meubles, des plans de travail, des seuils de fenêtre, des portes ou des pièces d'automobile.
